# EUROPÄISCHE PATENTSCHRIFT

(11) **EP 3 662 227 B1**
(45) Veröffentlichungstag und Bekanntmachung des Hinweises auf die Patenterteilung: **08.09.2021**
(21) Anmeldenummer: 18739483.8
(22) Anmeldetag: 02.07.2018
(51) Int. Cl.: G01B 11/25

(54) **LICHTSCHNITTSENSOR UND VERFAHREN ZUM BETREIBEN DIESES LICHTSCHNITTSENSORS**
LIGHT SECTION SENSOR AND METHOD FOR OPERATING THIS LIGHT SECTION SENSOR
CAPTEUR À COUPE OPTIQUE ET PROCÉDÉ SERVANT À FAIRE FONCTIONNER CE CAPTEUR À COUPE OPTIQUE

(30) Priorität: 04.08.2017 DE 102017213549
(43) Veröffentlichungstag der Anmeldung: 10.06.2020
(73) Patentinhaber: ifm electronic gmbh, 45128 Essen (DE)
(72) Erfinder: HÜLLEN, Markus, 88255 Baienfurt (DE); RAIDLER, David, 88263 Hasenweiler (DE); BAUER, Thomas, 74564 Crailsheim (DE)
(86) Internationale Anmeldenummer: PCT/EP2018/067747
(87) Internationale Veröffentlichungsnummer: WO 2019/025096

(56) Entgegenhaltungen:
- DE-A1- 19 749 435
- DE-A1-102011 089 660
- US-A1- 2004 189 944

## Beschreibung

Die Erfindung betrifft einen Lichtschnittsensor und ein Verfahren zum Betreiben desselben gemäß dem Patentanspruchs 1 und dem nebengeordneten Anspruch 9.

Optische Sensoren, insbesondere energetische Lichttaster mit Hintergrundausblendung, oft auch als Triangulations-Lichttaster bezeichnet, haben in den letzten beiden Jahrzehnten eine weite Verbreitung gefunden.

Sie werden in hoher Stückzahl in der Automatisierungstechnik eingesetzt und auch von der Anmelderin hergestellt und vertrieben.

Sie besitzen einen optischen Sender, der ein Lichtbündel auf ein Objekt 1 in seinem Überwachungsbereich aussendet und einen strukturierten Empfänger mit einer abbildenden Empfangsoptik. Die optischen Achsen von Sende-und Empfangsoptik sind oft parallel, können aber je nach Messaufgabe zwecks Erfüllung der Scheimpflug-Bedingung spitzwinklig zueinander verlaufen. Vorzugsweise diffus reflektierende Objekte werden in einem von ihrem Abstand abhängigen Winkel von der Empfangsoptik erfasst und auf einen von diesem Einfallswinkel abhängigen Ort auf den optischen Empfänger abgebildet (Triangulation).

Als Empfänger kommen alle ortsauflösenden Fotoempfänger in Frage, wobei in letzter Zeit vorwiegend CCD-Chips oder CMOS-Chips zum Einsatz kommen.

Zur Überwachung von Höhenprofilen, beispielsweise zur Objekterkennung auf einem Förderband, kommen Profilsensoren zum Einsatz, die ein Höhenprofil entlang einer projizierten Laserlinie vermessen. Diese Sensoren werden als Lichtschnittsensoren bezeichnet.

Die DE 10 2012 022 304 A1 zeigt einen Lichtschnittsensor mit Laserbeleuchtung, einer Zylinderoptik zur Erzeugung einer streifenförmigen Beleuchtung und einer abbildenden Empfangsoptik, sowie einem Detektorarray als Fotoempfänger. Des Weiteren wird ein durchstrahltes, als Leuchtfeldblende wirkendes LC-Display offenbart.

Die DE 102011089660 A1 zeigt keinen Lichtschnittsensor der vorstehenden Art, bei dem der Lichtschnittsensor als Profilsensor eingesetzt wird, der keine 3D-Geometrie, sondern ausschließlich eine zweidimensionale Höhenkontur erstellt. Dahingegen wird eine Anordnung mit handelsüblichen Einzelkomponenten und ein Verfahren für einen Soll-Ist-Vergleich gezeigt, wobei 3D-CAD-Daten mit erfassten 3D-Geometrie-Daten mittels einer Rechnereinrichtung miteinander verglichen werden, und die Abweichung über eine Projektion auf ein Werkstück visualisiert abgebildet wird, um einen Werker, eine Bearbeitungsperson, bei der manuellen Bearbeitung des Werkstücks visuell zu unterstützen. Die Erfassungseinrichtung, zur Erfassung dreidimensionaler Oberflächenkoordinaten eines Bauteils, kann dabei eine herkömmliche "Kinect"-Kamera der Firma "Microsoft" sein; als Projektor kann ein handelsüblicher "Beamer" verwendet werden. Insbesondere die Anordnung und Ausrichtung der einzelnen Komponenten zueinander ist relativ aufwändig. Zudem wird eine externe Rechnereinrichtung benötigt.

Die DE 19749435 A1 zeigt ebenso keinen Lichtschnittsensor der vorstehenden Art, sondern eine Vorrichtung zur Berechnung der dreidimensionalen Gestalt eines Objekts, welche anhand einer, aus mehreren auf das Objekt projizierten Linienmustern, die dreidimensionale Gestalt eines Objekts berechnet. Dabei dient die projizierte Struktur der Messung selbst und stellt keine Nutzerinformation dar. Ohne projizierte Struktur kann keine Messung, und damit keine dreidimensionale Berechnung des Objekts vorgenommen werden.

Die US 2004189944 A1 bezieht sich im Allgemeinen auf die Überprüfung und Korrektur von großen Stanzteilen im Herstellungsprozess mittels eines Soll-Ist-Vergleichs und auf ein Verfahren zur Herstellung einer optischen, dreidimensionalen topographischen Darstellung von Oberflächenprofilfehlern direkt auf der zu überprüfenden Oberfläche. Auch hier dient die projizierte Struktur der Messung selbst und stellt keine Nutzerinformation im Sinne der vorliegenden Erfindung dar.

Die DE 10 2007 003 024 A1 zeigt einen Triangulationssensor zur Bestimmung der Entfernung anhand eines strukturierten Beleuchtungsmusters, das mit Hilfe einer Linse oder eines diffraktiven optischen Elements erzeugt wird.

Wie sich gezeigt hat, ist die Einstellung und Justage solcher Sensoren nicht intuitiv und bietet aktuell keinerlei Orientierungshilfen. Begrenzt ein Benutzer beispielsweise den zu vermessenden Bereich auf einen Bruchteil der auf das Objekt projizierten Laserlinie, so wird diese Begrenzung nur indirekt über abstrakte Parameter angegeben bzw. angezeigt. Eine Möglichkeit zur benutzerfreundlicheren Visualisierung besteht durch ergänzende Hardware wie zum Beispiel ein an den Sensor angeschlossener Computer, auf dem die gemessene Linie mit eingestellten Grenzen dargestellt wird. Aber auch hier besteht das Problem darin, dass der Benutzer die Visualisierung lagerichtig in den Messbereich übertragen muss.

Die US 2013 / 0 083 384 A1 beschreibt einen Lichtschnittsensor mit einem optischen Sender zur Erzeugung eines (kollimierten) ersten Lichtbündels, einer Sendeoptik zur Umformung des ersten Lichtbündels in ein zweites, linienförmiges Lichtbündel, einer aktiven Leuchtfeldblende (liquid crystal shutter array) für das zweite Lichtbündel die aus dem zweiten ein drittes, moduliertes Lichtbündel erzeugt wird, sowie einem strukturierten Empfänger mit einer Empfangsoptik, die ein im Überwachungsbereich befindliches diffus reflektierendes Objekt in einem vom Objektabstand abhängigem Winkel erfasst und auf den strukturierten Empfänger abbildet.

Die US 2016/0 123 893 A1 beschreibt eine Anordnung zur Messung von Texturen und Oberflächenstrukturen, wobei ein Messmusterbild (MPI) und ein Ergebnisbild (RI) auf die Oberfläche projiziert werden.

Die US 2005 / 0 068 532 A1 und die DE 10 2008 012 496 A1 beschreiben ähnliche Anordnungen.

Als nachteilig wird angesehen, dass keine Informationen außerhalb des Messfeldes und auch nicht mit Wellenlängen außerhalb des vom genannten (ersten) optischen Sender erzeugbaren Spektralbereichs auf das Objekt projiziert werden können. Deshalb besteht die Aufgabe der Erfindung darin, diese Sensoren bedienfreundlicher zu gestalten und die Arbeit mit ihnen zu erleichtern. Insbesondere soll deren Einstellung und Justage effizienter und sensorisch zuverlässiger gestaltet werden.

Diese Aufgabe wird mit dem Kennzeichen des Patentanspruchs 1 und des nebengeordneten Anspruchs 9 gelöst. Die abhängigen Ansprüche betreffen die Ausgestaltung der Erfindung.

Die wesentliche Idee der Erfindung besteht darin, ein an sich bekanntes und gemäß dem Stand der Technik als Leuchtfeldblende verwendetes durchstrahltes LC-Display unabhängig vom Messstrahlengang als Informationsquelle für die Bedienperson zu verwenden. Wobei anstatt eines LC-Displays steuerbarere Durchlicht-Projektoren jeglicher Art verwendbar sind.

Der in Rede stehende Lichtschnittsensor weist in bekannter Weise einen optischen Sender auf, der ein erstes Lichtbündel erzeugt und in einen Überwachungsbereich aussendet, eine Sendeoptik, die das erste Lichtbündel in ein linienförmiges zweites Lichtbündel umformt, sowie eine aktive Leuchtfeldblende für das zweite Lichtbündel, die daraus ein drittes strukturiertes Lichtbündel erzeugt, und einen strukturierten Empfänger mit einer Empfangsoptik, die ein im Überwachungsbereich befindliches diffus reflektierendes Objekt in einem vom Objektabstand abhängigen Winkel erfasst und auf einen strukturierten optischen Empfänger abbildet.

Die aktive Leuchtfeldblende dient erfindungsgemäß zur Projektion von sichtbaren Informationen, indem mit dem dritten strukturierten Lichtbündel sichtbare Symbole in den Überwachungsbereich und auf ein dort befindliches Objekt projiziert werden, wobei die Grenzen einer Region von besonderem Interesse (ROI), englisch: "Region Of Interest", ROI), markiert, definiert und/oder positioniert werden sollen.

In einer äquivalenten, nur in wenigen Fällen vorteilhaften Ausgestaltung kann sich die aktive Leuchtfeldblende auch unmittelbar vor einer Lichtquelle befinden.

Die in erster Linie als Liniengenerator wirkende strahlformende Sendeoptik ist im einfachsten Fall eine Zylinderlinse, kann aber auch ein diffraktives Element (DOE) oder eine Freiformlinse sein.

In einer besonderen Ausgestaltung kann die aktive Leuchtfeldblende sogar als einziges strukturiertes Anzeigeelement wirken und den Einbau eines weiteren grafischen Displays überflüssig machen, was sowohl die Baugröße als auch die Herstellungskosten für den Lichtschnittsensor reduziert.

Erfindungsgemäß können während des Einstellvorgangs neben den aktuellen Grenzen des eingestellten Überwachungsbereichs auch Bedienhinweise oder das beim letzten Messvorgang ermittelte Höhenprofil angezeigt werden.

Zur besseren Visualisierung können Inhalte wie Markierungen auch dynamisch eingeblendet werden. Hierbei sind Varianten wie invertierend oder blinkend denkbar. Des Weiteren können Übersteuerungen des Empfangselements angezeigt und durch örtlich selektive Anpassung der Transmission einzelner Segmente der Linie während der Messung beseitigt werden, wodurch die Dynamik der Messung verbessert wird. Die Erfindung betrifft auch ein Verfahren zum Betreiben des Lichtschnittsensors, wobei eine an sich bekannte Anordnung in neuartiger Weise zur Projektion von Nutzerinformationen in den Überwachungsbereich und damit auf ein dort befindliches Objekt verwendet wird.

Das geschieht erfindungsgemäß während eines Justier- oder Einstellvorgangs, wobei dem Bediener die aktuell eingestellten Messfeldgrenzen und eventuell andere Parameter oder sonstige Informationen angezeigt werden, ohne dass dabei notwendigerweise eine Messung stattfindet.

Erfindungsgemäß weist die optische Anordnung zwei Lichtquellen (Laser/LED) auf. Diese können unterschiedliche Wellenlängen besitzen, wobei nur die sichtbare zweite Lichtquelle durch die Leuchtfeldblende beeinflussbar ist. Die erste Lichtquelle, welche das zu messende Signal erzeugt bleibt unstrukturiert. Anschließend werden beide Strahlengänge überlagert.

Wegen deren besseren Fremdlichtverträglichkeit kann auch eine PMD-Matrix als strukturierter Empfänger verwendet werden ohne die Lichtlaufzeit auszuwerten, wobei PMD für einen beispielsweise aus der DE 10 2012 203 596 A1 bekannten Photomischdetektor steht.

Die Erfindung wird anhand der Zeichnung näher erläutert.

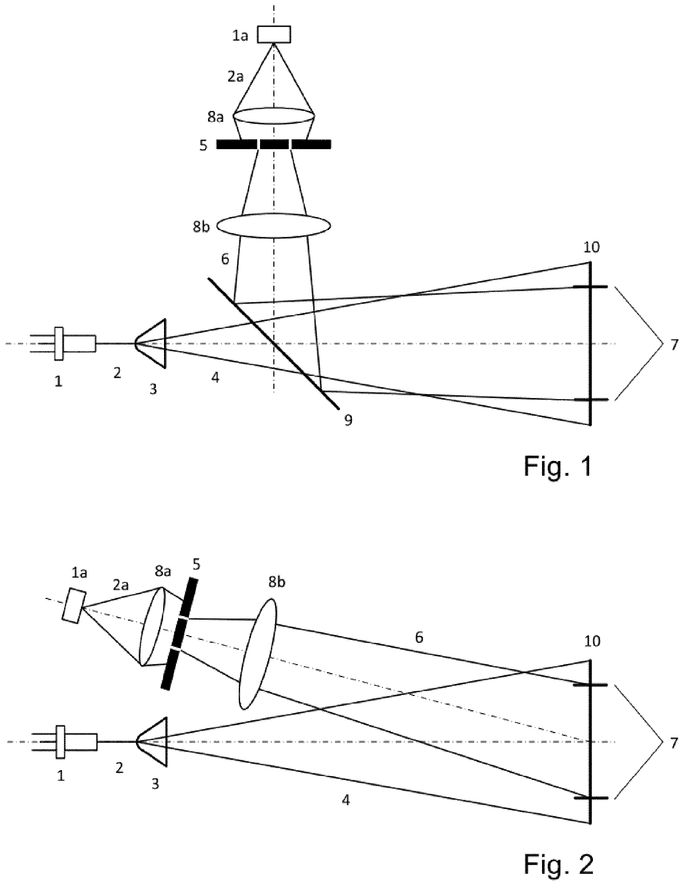

Die Figur 1 zeigt einen ersten erfindungsgemäßen Lichtschnittsensor mit einem optischer Sender 1 zur Erzeugung eines ersten, in vorteilhafter Weise parallelen Lichtbündels 2.

Eine strahlumformende Sendeoptik 3, erzeugt aus diesem ersten Lichtbündel 2 ein zweites linienförmiges Lichtbündel 4.

Das zweite Lichtbündel 4 durchläuft nun einen Strahlteiler 9 und wird schließlich auf ein Objekt 10 projiziert.

Eine als Projektionslichtquelle dienende zweite Lichtquelle 1a, beispielsweise eine Laserdiode, eine LED oder eine LED-Matrix, erzeugt ein zweites Lichtbündel 2a.

Nun wird das Lichtbündel 2a durch eine erste Beleuchtungsoptik 8a auf ein als aktive Leuchtfeldblende 5 wirkendes LC-Display gelenkt, welches als variable Blende zur Begrenzung wirken kann, in der Hauptsache jedoch zur Strukturierung des Lichtbündels 2a dienen soll.

Das noch nicht modulierte, aber bei Verwendung einer LED-Matrix als Lichtquelle 1a möglicherweise bereits strukturierte Lichtbündel 2a durchläuft die Leuchtfeldblende 5, ein LCD-Display oder eine LCD-Matrix, die anschließend von der Projektionsoptik 8b auf das Objekt 10 abgebildet wird, wobei es vorher vom Strahlteiler 9 mit dem linienförmigen Lichtbündel 4 überlagert wird.

Die Leuchtfeldblende 5 dient erfindungsgemäß zur Begrenzung und Strukturierung des Lichtbündels 2a, beispielsweise um bestimmte Bereiche abzuschwächen oder Pixel sogar nahezu vollständig abzuschalten, wobei ein drittes Lichtbündel 6 entsteht, das eine Region von besonderem Interesse (ROI) 7 im Überwachungsbereich markiert und außerdem Informationen an den Nutzer auf ein Objekt 10 projiziert. So ist es möglich, während eines Einstellvorgangs Informationen auf einen auf einen vorübergehend dort platzierten Bildschirm zu projizieren.

Es sei noch angemerkt, dass der Strahlenverlauf vereinfacht dargestellt ist.

Die Figur 2 zeigt einen zweiten erfindungsgemäßen Lichtschnittsensor, der ebenfalls einen optischer Sender 1 aufweist, der ein erstes Lichtbündel 2 entstehen lässt.

Eine strahlformenden Sendeoptik 3 erzeugt ein daraus ein zweites linienförmiges Lichtbündel 4, dass von der Sendeoptik 3 auf ein Objekt 10 projiziert wird.

Das zweite Lichtbündel 4 trifft auf das Objekt 10.

Eine als Projektionslichtquelle dienende zweite Lichtquelle 1a, z. B. eine Laserdiode, eine LED oder eine LED-Matrix, erzeugt ein Lichtbündel 2a, welches durch eine erste Beleuchtungsoptik 8a auf ein als aktive Leuchtfeldblende 5 wirkendes LC-Display gelenkt wird.

Die Leuchtfeldblende 5 dient auch hier als variable Blende zur Strukturierung des Lichtbündels 2a, wobei unter Strukturierung eine Abschwächung bis hin zur vollständigen Anschaltung einzelner Pixel verstanden werden soll.

So entsteht ein drittes Lichtbündel 6, das eine Region von besonderem Interesse, (ROI) 7 auf dem Objekt 10 markiert, aber auch erfindungsgemäß zur Übermittlung von Informationen an einen Benutzer dienen kann.

Insoweit wäre es möglich, ein gerätinternes Anzeige-Display vollständig zu ersetzen.

Wegen des fehlenden Strahlteilers 9 müssen die beiden Lichtbündel 4 und 6 nicht nur justiert, sondern in Abhängigkeit von ihrem Abstand zur Objektebene 10 auch gegeneinander geschwenkt werden. Hier ist eine Abstandsmessung von Vorteil, die mit Hilfe eines in das System integrierten PMD-Lichtlaufzeitsensors geschehen kann (siehe oben). Solche Geräte werden von der Anmelderin in verschiedenen Ausführungen, unter anderem mit der Bezeichnung O1D angeboten.

So wird nicht nur ein Überwachungsbereich markiert, sondern auch vorübergehend Informationen angezeigt, was für den Bediener während eines Justier- und /oder Teach-Vorgangs außerordentlich hilfreich sein kann.

Der nicht erfindungswesentliche strukturierte Empfänger mit einer Empfangsoptik, die ein im Überwachungsbereich befindliches diffus reflektierendes Objekt in einem vom Objektabstand abhängigen Winkel erfasst und auf einen von diesem Einfallswinkel abhängigen Ort auf den optischen Empfänger abbildet, sowie eine ebenfalls unerlässliche Steuer- und Auswerteeinheit ist zur besseren Übersicht in den beiden Figuren nicht gezeigt.

Die Sender 1 und 1a können eine LED, eine Multi Color LED (zweifarbig oder RGB) oder eine Laserdiode, z. B. eine VCSEL (vertical-cavity surface-emitting laser) Diode aufweisen.

Das Lichtbündel 2 ist vorzugsweise kollimiert, ohne jedoch die Erfindung darauf zu beschränken.

Als optische Bauelemente 8a und 8b können Linsen, Zylinderlinsen, Mikrolinsen oder Fresnellinsen in sphärischer oder asphärischer Ausführung eingesetzt werden.

Für die Leuchtfeldblende 5 kommen die in der US 2013 / 0 083 384 A1 genannten Flüssigkristallanzeigen, kurz LCD (Liquid Crystal Display) in Frage, die sowohl als Punktmatrix (Dot-Matrix) oder mit vordefinierten Elementen ausgestaltet sein können, was die (speziellen Anwendungen vorbehaltene) äquivalente Verwendung einer mechanischen Leuchtfeldblende 5 nicht gänzlich ausschließt.

Die in den Überwachungsbereich und damit auch auf das Objekt 10 projizierten Strukturen sind vorzugsweise:
1. Geschlossene oder offene Intervallgrenzen,
2. Justagehilfsmarker für die Montage
3. Orientierungshilfen,
4. Montagehilfen für den Bediener:
   a) Projektion eines Rechtecks,
   b) Teststrukturen zur Messung der Verzeichnung
      => zur orthogonalen Montage des Sensors und zur Lageerkennung
      => zur Speicherung von einer oder mehrerer Austauschpositionen,
5. Bargraphen mit einem Schleppzeiger (Matching),
6. Toleranzbandanzeigen für die Achsrichtungen x- und y.

Die Anzeige kann mehrfarbig ausgestaltet sein, was der besseren Erkennbarkeit auf einem Objekt, der Rücklesbarkeit durch den Sensor beispielsweise bei Umschaltung von Grün auf Rotlicht (auf diese Weise entfällt das Einlernen der Markerpositionen), der Vermeidung von Auflösungsverlusten durch eine spektrale Trennung von Mess- und Anzeigebeleuchtung und schließlich zur Synchronisation zwischen der Multi-Color-LED und einer aktiven Leuchtfeldblende 5 dient.

Das an sich als Leuchtfeldblende 5 bekannte LC-Display, wird in neuartiger Weise zur Projektion von Nutzerinformationen in den Überwachungsbereich und damit auf ein dort befindliches Objekt 10 verwendet. Das geschieht erfindungsgemäß während eines Justier- oder Einstellvorgangs, wobei dem Bediener die aktuell eingestellte ROI (Region Of Interest) 7, d.h. Messfeldgrenzen, sowie Parameter und/oder weitere Informationen angezeigt werden können.

Optional können Justagemarker und/oder Orientierungsmarker (für rechts, links, oben, unten) und/oder Marker zur Lagebestimmung (und Quittierung) und/oder als Schleppzeiger ausgestaltete Bargraphen zur Beurteilung der Signalqualität und/oder die Kontur eines Toleranzbandes für das Objekt 10 in den Überwachungsbereich und damit auch auf das Objekt 10 projiziert werden.

So kann ein Bediener ohne Weiteres erkennen, ob sich das Objekt 10 am richtigen Ort, in der gewünschten Orientierung und innerhalb eines Toleranzbandes befindet. Durch die Schleppzeiger-Funktion können Veränderungen registriert werden.

### Bezugszeichenliste

- 1: Erste Lichtquelle, optischer Sender, (Multi Color-) LED, Laser oder VCSEL
- 1a: Zweite Lichtquelle, Projektionslichtquelle, (Multi Color-) LED, Laser, VCSEL
- 2: Erstes Lichtbündel, vorzugsweise Laserstrahl
- 2a: Drittes Lichtbündel (optional bereits strukturiert)
- 3: Strahlformende Sendeoptik, vorzugsweise Liniengenerator, Zylinderlinse
- 4: Zweites, umgeformtes Lichtbündel, vorzugsweise linienförmig
- 5: Leuchtfeldblende, vorzugsweise aktive (steuerbare) Blende, z.B. LC-Display
- 6: Viertes Lichtbündel (strukturiert)
- 7: Region von besonderem Interesse, Region Of Interest (ROI)
- 8a: Beleuchtungsoptik für das vierte Lichtbündel 6
- 8b: Projektionslinse für das vierte Lichtbündel 6
- 9: Strahlteiler
- 10: Objekt, Überwachungsbereich

## Patentansprüche

1. Lichtschnittsensor mit einem optischen Sender (1), der ein erstes Lichtbündel (2) erzeugt, einer Sendeoptik (3), die das erste Lichtbündel (2) in ein linienförmiges zweites Lichtbündel (4) umformt und in einen Überwachungsbereich aussendet, um eine Laserlinie zu projizieren und zur Objekterkennung ein Höhenprofil entlang der projizierten Laserlinie zu vermessen, wobei
ein strukturierter Empfänger mit einer Empfangsoptik vorgesehen ist, der den Überwachungsbereich auf den strukturierten Empfänger abbildet,
wobei ein diffus reflektierendes Objekt (10) im Überwachungsbereich in einem vom Abstand abhängigen Winkel erfasst wird, **dadurch gekennzeichnet, dass** ein zweiter optischer Sender (1a) vorhanden ist, der ein drittes Lichtbündel (2a) erzeugt, das über eine Beleuchtungsoptik (8a) eine Leuchtfeldblende (5) ausleuchtet, wobei durch eine Projektionsoptik (8b) ein viertes Lichtbündel (6) erzeugt wird, welches die Leuchtfeldblende (5) in den Überwachungsbereich projiziert und dem zweiten Lichtbündel (4) direkt oder über einen Strahlteiler (9) überlagert wird, wobei
zur Einstellung und Justage dem Anwender anhand des vierten Lichtbündels (6) anwendungsspezifische Symbole oder Informationen dargestellt werden, wobei unter anderem die aktuellen Grenzen des eingestellten Überwachungsbereichs angezeigt werden.

2. Lichtschnittsensor gemäß Anspruch 1, **dadurch gekennzeichnet, dass** Orientierungsmarker für den Bediener auf das Objekt (10) projiziert werden.

3. Lichtschnittsensor gemäß Anspruch 1, **dadurch gekennzeichnet, dass** Justagemarker für den Bediener und die Fertigung auf das Objekt (10) projiziert werden.

4. Lichtschnittsensor gemäß Anspruch 1, **dadurch gekennzeichnet, dass** Marker zur Lagebestimmung auf das Objekt (10) projiziert werden.

5. Lichtschnittsensor gemäß Anspruch 1, **dadurch gekennzeichnet, dass** Bargraphen mit einem Schleppzeiger auf das Objekt (10) projiziert werden.

6. Lichtschnittsensor gemäß Anspruch 1, **dadurch gekennzeichnet, dass** ein Toleranzband auf das Objekt (10) projiziert werden.

7. Lichtschnittsensor gemäß Anspruch 1, **dadurch gekennzeichnet, dass** Bedienhinweise auf das Objekt (10) projiziert werden.

8. Lichtschnittsensor gemäß Anspruch 1, **dadurch gekennzeichnet, dass** ein vorher ermitteltes Höhenprofil in den Überwachungsbereich und auf ein dort befindliches Objekt (10) projiziert wird.

9. Verfahren zum Betreiben eines Lichtschnittsensors gemäß einem der vorhergehenden Ansprüche, **dadurch gekennzeichnet, dass** der zweite optische Sender (1a) zur Projektion von Nutzerinformationen in den Überwachungsbereich und damit auf ein dort befindliches Objekt (10) verwendet wird, was zur Unterstützung eines Justier- oder Einstellvorgangs dient.

10. Verfahren gemäß Anspruch 9, **dadurch gekennzeichnet, dass** während dieses Vorgangs eine Region von besonderem Interesse (7) angezeigt wird.

## Claims

1. Light section sensor having an optical transmitter (1) which produces a first light beam (2), a transmission optical unit (3), which re-shapes the first light beam (2) into a line-shaped second light beam (4) and emits it into a monitoring region,
in order to project a laser line and to measure a height profile along the projected laser line for the purpose of object detection, wherein a structured receiver having a receiving optical unit is provided, which images the monitoring region onto the structured receiver,
wherein a diffusely reflective object (10) is captured in the monitoring region at an angle depending on the distance, **characterized in that** a second optical transmitter (1a) is present which produces a third light beam (2a) that fully lights a lighting field diaphragm (5) via an illumination optical unit (8a), wherein a fourth light beam (6), which the lighting field diaphragm (5) projects into the monitoring region and is superposed directly or via a beam splitter (9) on the second light beam (4), is produced by a projection optical unit (8b), wherein for setting and adjusting purposes application-specific symbols or information is/are presented to the user on the basis of the fourth light beam (6), wherein, inter alia, the current limits of the set monitoring region are indicated.

2. Light section sensor according to Claim 1, **characterized in that** orientation markers are projected onto the object (10) for the operator.

3. Light section sensor according to Claim 1, **characterized in that** adjustment markers are projected onto the object (10) for the operator and the manufacture.

4. Light section sensor according to Claim 1, **characterized in that** markers for position determination are projected onto the object (10).

5. Light section sensor according to Claim 1, **characterized in that** bar graphs with a drag pointer are projected onto the object (10).

6. Light section sensor according to Claim 1, **characterized in that** a tolerance band is projected onto the object (10).

7. Light section sensor according to Claim 1, **characterized in that** operating notes are projected onto the object (10).

8. Light section sensor according to Claim 1, **characterized in that** a previously ascertained height profile is projected into the monitoring region and onto an object (10) located there.

9. Method for operating a light section sensor according to one of the preceding claims, **characterized in that** the second optical transmitter (1a) is used for projecting user information into the monitoring region and consequently onto an object (10) located there, which serves for supporting an adjustment or setting operation.

10. Method according to Claim 9, **characterized in that** a region of particular interest (7) is indicated during this operation.

## Revendications

1. Capteur à coupe optique comprenant un émetteur optique (1), qui génère un premier faisceau lumineux (2), une optique d'émission (3), qui transforme le premier faisceau lumineux (2) en un deuxième faisceau lumineux (4) en forme de ligne et l'envoie dans une zone de surveillance,
afin de projeter une ligne laser et mesurer un profilé de hauteur le long de la ligne laser projetée en vue d'une reconnaissance d'objet, un récepteur structuré étant pourvu d'une optique de réception, laquelle représente la zone de surveillance sur le récepteur structuré,
un objet (10) réfléchissant de manière diffuse dans la zone de surveillance étant détecté dans un angle dépendant de la distance, **caractérisé en ce qu'**un deuxième émetteur optique (1a) est présent, lequel génère un troisième faisceau lumineux (2a) qui éclaire, par le biais d'une optique d'éclairage (8a), un diaphragme de limitation de champ lumineux (5), un quatrième faisceau lumineux (6) étant généré par une optique de projection (8b), lequel projette le diaphragme de limitation de champ lumineux (5) dans la zone de surveillance et est superposé au deuxième faisceau lumineux (4) directement ou par le biais d'un diviseur de rayons (9), des symboles ou des informations spécifiques à l'application étant affichés à l'utilisateur à l'aide du quatrième faisceau lumineux (6) en vue du réglage et de l'ajustement, les limites actuelles de la zone de surveillance réglée étant, entre autres, affichées.

2. Capteur à coupe optique selon la revendication 1, **caractérisé en ce que** des marqueurs d'orientation pour l'opérateur sont projetés sur l'objet (10).

3. Capteur à coupe optique selon la revendication 1, **caractérisé en ce que** des marqueurs d'ajustement pour l'opérateur et la fabrication sont projetés sur l'objet (10) .

4. Capteur à coupe optique selon la revendication 1, **caractérisé en ce que** des marqueurs servant à la détermination de la position sont projetés sur l'objet (10) .

5. Capteur à coupe optique selon la revendication 1, **caractérisé en ce que** des bargraphes comprenant un pointeur entraîné sont projetés sur l'objet (10).

6. Capteur à coupe optique selon la revendication 1, **caractérisé en ce qu'**une bande de tolérance est projetée sur l'objet (10).

7. Capteur à coupe optique selon la revendication 1, **caractérisé en ce que** des instructions de commande sont projetées sur l'objet (10).

8. Capteur à coupe optique selon la revendication 1, **caractérisé en ce qu'**un profil de hauteur déterminé précédemment est projeté dans la zone de surveillance et sur un objet (10) qui s'y trouve.

9. Procédé pour faire fonctionner un capteur à coupe optique selon l'une des revendications précédentes, **caractérisé en ce que** le deuxième émetteur optique (1a) est utilisé pour la projection d'informations d'utilisateur dans la zone de surveillance et ainsi sur un objet (10) qui s'y trouve, ce qui sert à l'assistance à une opération d'ajustement ou de réglage.

10. Procédé selon la revendication 9, **caractérisé en ce qu'**une région présentant un intérêt particulier (7) est affichée pendant cette opération.
